# NEUE EUROPÄISCHE PATENTSCHRIFT

(11) **EP 0 886 474 B2**
(45) Veröffentlichungstag und Bekanntmachung des Hinweises auf die Entscheidung über den Einspruch: **31.08.2005**
(45) Hinweis auf die Patenterteilung: 13.06.2001
(21) Anmeldenummer: 97903357.8
(22) Anmeldetag: 21.02.1997
(51) Int. Cl.: A23G 3/00

(54) **KARAMELLEN ENTHALTEND EIN SÜSSUNGSMITTEL**
CARAMELS CONTAINING A SWEETENER
CARAMELS RENFERMANT UN EDULCORANT

(30) Priorität: 24.02.1996 DE 19606968
(43) Veröffentlichungstag der Anmeldung: 30.12.1998
(73) Patentinhaber: SÜDZUCKER AKTIENGESELLSCHAFT MANNHEIM/OCHSENFURT, 68165 Mannheim (DE)
(72) Erfinder: WILLIBALD-ETTLE, Ingrid, D-76829 Landau (DE); DEGELMANN, Hanspeter, D-67549 Worms (DE); KOWALCZYK, Jörg, D-67248 Bockenheim (DE); KUNZ, Markwart, D-67550 Worms (DE); MUNIR, Mohammad, D-67271 Kindenheim (DE); RAPP, Knut, M., D-67591 Offstein (DE)
(74) Vertreter: Schrell, Andreas
(86) Internationale Anmeldenummer: PCT/EP1997/000854
(87) Internationale Veröffentlichungsnummer: WO 1997/030598

(56) Entgegenhaltungen:
- EP-A- 0 109 009
- EP-A- 0 625 578
- DE-A- 19 523 008
- FR-A- 2 179 966
- NL-A- 9 001 940
- US-A- 4 792 453
- US-A- 4 961 935
- US-A- 4 971 798
- Munir M. et al, Carbohydrate Research, 1987, Band 164, pp. 477-485
- Römpps Chemie Lexikon, catchword "Textur", 1977
- Ullmanns Encyklopädie der technischen Chemie, 4. Auflage, Band 24, pp. 780-782, 1983, Verlag Chemie, Weinheim

## Beschreibung

Die vorliegende Erfindung betrifft die Verwendung von 1,1-GPS (1-O-α-D-Glucopyranosyl-D-sorbit in einer zuckerfreien Hartkaramellen.

Die EP-A2 0 303 295 beschreibt eine Hartkaramelle, die Meso-Erythrit als Hauptkomponente sowie weitere Saccharide wie Saccharose, Glucose, Malzsirup, Fructose, Isomaltulose und Isomaltose enthält. Die US-Patentschrift Nr. 4,587,119 beschreibt die Verwendung von Isomaltulose als Saccharoseersatz in bestimmten Nahrungsmitteln und pharmazeutischen Produkten. Die US-Patentschrift Nr. 4,971,798 offenbart Hartkaramellen, die hydrierte Isomaltulose enthalten. Hydrierte Isomaltulose ist ein nahezu äquimolares Gemisch aus 6-O-α-D-Glucopyranosyl-D-sorbit (= 1,6 GPS) und dem stereoisomeren 1-O-α-D-Glucopyranosyl-D-mannit (= 1,1 GPM). Hydrierte Isomaltulose wird hergestellt, indem Saccharose enzymatisch isomerisiert wird, die entstandene Isomaltulose von den weiteren Bestandteilen, wie zum Beispiel Trehalulose und Isomaltose, abgetrennt wird, und die Isomaltulose zu 1,6-GPS und 1,1-GPM hydriert wird, wobei 1,1 GPM als Dihydrat auskristallisiert. Die in den genannten Hartkaramellen verwendete hydrierte Isomaltulose zeichnet sich also durch ein recht aufwendiges Herstellungsverfahren sowie zudem durch verbesserungsfähige Löslichkeit, Süßkraft und Rekristallisationsneigung aus. Aus der EP-B1 0 625 578 sind Süßungsmittel aus 1,6-GPS, 1,1-GPM und 1,1-GPS (1-O-α-D-Glucopyranosyl-D-sorbit) bekannt. Diese Druckschrift offenbart, die kristallisationsneigung von 1,1-GPM in diesem Süßungsmittel durch Erhöhung des 1,1-GPS-Gehaltes zu unterdrücken.

Das der Erfindung zugrundeliegende technische Problem besteht daher darin, Verwendungen von 1,1-GPS in Karamellen bereitzustellen, die die vorgenannten Nachteile überwinden.

Die Lösung dieses technischen Problems wird durch die Bereitstellung der im Hauptanspruch genannten Verwendung gelöst, insbesondere durch die Bereitstellung der Verwendung von 1,1-GPS in Hartaramellen. Die erfindungsgemäß vorgesehene Verwendung resultiert in einem verbesserten Löslicheitsverhalten und verbesserter Süßkraft der Karamellen. 1,1 GPM kann dabei wasserfrei oder in Form seines Dihydrats vorliegen.

Derartige Karamellen weisen also als Süßungsmittel 1,1 GPS beziehungsweise ein Gemisch aus 1,6 GPS, 1,1 GPS und 1,1 GPM auf und enthalten somit vorzugsweise nur nicht-kariogene, kalorienarme und diabetikergeeignete Süßungsmittel. Zudem verringert 1,1-GPS die Rekristallisationsneigung des 1,1-GPM. Die Karamellen weisen insbesondere aufgrund ihres 1,1 GPS-Gehaltes eine gegenüber hydrierter Isomaltulose (auch Isomalt genannt) erhöhte Löslichkeit und Süßkraft auf. Überraschenderweise hat sich gezeigt, daß die Karamellen in ihrer Lösegeschwindigkeit zwischen der von herkömmlichen Zucker und hydrierte Isomaltulose enthaltenden Karamellen liegen. Die Karamellen erweitern also in vorteilhafter Weise das Spektrum der für die unterschiedlichsten Zwecke und Anforderungen zur Verfügung stehenden Karamellen. Die Karamellen sind ebenso wie hydrierte Isomaltulose enthaltende Karamellen nicht-hygroskopisch und aufgrund ihres 1,1 GPS Gehaltes verbessert lagerfähig. Schließlich beruht ein weiterer Vorteil auf der Variabilität des verwendeten Süßungsmittelgemisches, da sich durch Variation der Mengenanteile von 1,6 GPS, 1,1 GPS und 1,1 GPM Karamellen mit unterschiedlicher Textur, Oberflächenstruktur und Löslichkeitsverhalten herstellen lassen. Diese besonderen Eigenschaften machen die Karamellen unerwarteterweise besonders geeignet zur Applikation von pharmazeutischen Wirkstoffen, deren Freigabe im Mund- und Rachenraum kontinuierlich und schnell einsetzend erfolgen soll. Die Karamellen ermöglichen aufgrund des geschilderten Löslichkeitsverhaltens eine im Vergleich zu zuckerhaltigen Karamellen lang anhaltende, kontinuierliche Wirkstoffreigabe, die, im Unterschied zu hydrierte Isomaltulose enthaltenden Karamellen, sehrschnell einsetzt. Im Zusammenhang dervorliegenden Erfindung sind unter pharmazeutischen Wirkstoffen Wirkstoffe zu verstehen, die einen erwünschten physiologischen Effekt auf den menschlichen oder tierischen Körper ausüben und der Prophylaxe oder Therapie von Krankheitsbildern oder Mangelerscheinungen dienen.

Schließlich lassen sich die das vorgenannte Gemisch enthaltenden Karamellen einfacher und kostengünstiger herstellen, da das in ihnen enthaltene Süßungsmittelgemisch vergleichsweise einfach zu erhalten ist. Bei der Herstellung von Karamellen, die hydrierte Isomaltulose enthalten, muß nämlich nach Isomerisierung des Ausgangsmaterials, also der Saccharose, erst eine Abtrennung der erhaltenden Isomaltulose von Trehalulose und Isomaltose erfolgen. Dies kann erfindungsgemäß unterbleiben, da das verwendete Süßungsmittelgemisch direkt aus dem Isomerisierungsprodukt, also Trehalulose, Isomaltulose und Isomaltose, gewonnen wird. Die Karamellen lassen sich auch schonender herstellen, da die das Süßungsmittelgemisch enthaltende Schmelze geschmeidiger ist und daher eine schonendere und leichtere Verarbeitung der empfindlichen Wirk- und/oder Aromastoffe bei niedrigen Temperaturen möglich ist. Auch die Prägetemperaturen können vermindert werden.

Gemäß der Erfindung wird eine Verwendung in einer Karamelle bereitgestellt, die ein Süßungsmittelgemisch enthält, das 10 bis 50 Gew.-% 1,6 GPS, 2 bis 20 Gew.-% 1,1 GPS und 30 bis 70 Gew.-% 1,1 GPM enthält (bezogen auf die Gesamttrockensubstanz des Süßungsmittelgemisches).

Erfindungsgemäß ist auch vorgesehen, daß das in den Karamellen enthaltende Süßungsmittel zusätzlich Zuckeralkohole, insbesondere Maltit, hydrierte Stärke Hydrolysate (HSH), Erythrit, Sorbit, Xylit, Lactit und/oder Mannit enthält. Mannit kann in bevorzugter Weise in einer Menge von 0,4 bis 4 Gew.-% und Sorbit in einer Menge von 1 bis 9 Gew.-%, bezogen auf die Gesamttrockensubstanz des Süßungsmittels, verwendet werden.

Schließlich kann auch in besonders bevorzugter Weise vorgesehen sein, 1,1 GPS beziehungsweise dem Süßungsmittelgemisch einen oder mehrere Farbstoffe, Füllstoffe, und/oder Fettersatzstoffe zuzusetzen.

Es ist also vorgesehen, den Karamellen medizinisch wirksame Substanzen zuzusetzen, wie beispielsweise Antihistamine, Antibiotika, Fungizide, Mikrobizide, Hexylresorcin, Dextromethorphan hydrobromid, Menthol, Nicotin, Coffein, Vitamine, Mentholeukalypthus, Benzocain, Cethylpyridinium, Fluoride, Phenylpropanolamin oder andere pharmazeutisch wirksame Substanzen.

Die erfindungsgemäß zu verwendenden Geschmacksstoffe können künstliche Substanzen oder beispielsweise aus Pflanzen oder Früchten gewonnene Öle wie beispielsweise Zitrusöl oder Fruchtessenzen sein. Demgemäß können Öle aus Menthol, Eukalypthus, Pfefferminz und andere Aromen verwendet werden.

Erfindungsgemäß kann auch vorgesehen sein, den Karamellen Intensivsüßstoffe zur Erhöhung der Süßkraft zuzufügen, wie Aspartam, Cyclamat, Acesulfam-K, Saccharin, Sucralose, Alitame, Neohesperidin DC, Stevioside, Thaumatin oder ähnliche.

Schließlich können auch Bindemittel, beispielsweise aus der Gruppe der Alginate, Gelatine, Zellulose oder Pflanzengummis verwendet werden.

Als Farbstoffe kommen synthetische oder natürliche Farbstoffe in Betracht. Als synthetischer Farbstoff kann beispielsweise Erythrosin, Indigo Carmine, Tartrazin oder Titandioxid verwendet werden, während natürliche Farbstoffe beispielsweise Karotinoide (zum Beispiel β-Karotin), Riboflavine, Chlorophyll, Anthocyane (Rote Beete), Betanin oder ähnliches sein können. Im Fall der Verwendung von synthetischen Farbstoffen werden typischerweise 0,01 bis 0,03 Gew.-% an Farbstoff eingesetzt, während im Fall natürlicher Farbstoffe 0,1 bis 1 Gew.-% (jeweils bezogen auf das Gesamtgewicht der Karamelle) verwendet werden.

Als Füllstoffe können beispielsweise Polydextrose oder Inulin dienen.

Als Fettersatzstoffe kommen beispielsweise Caprenin, Salatrim oder Olestra in Betracht.

Als organische Säuren können beispielsweise Zitronensäure, Äpfelsäure, Weinsäure, Ascorbinsäure oder ähnlich wirkende, lebensmittelverträgliche Säuren eingesetzt werden.

Erfindungsgemäß ist die Karamelle als Hart- karamelle ausgeführt. Eine Hartkaramelle ist ein amorphes Produkt, das durch die Evaporation von Wasser aus einem Zuckeraustauschstoffgemisch entsteht, indem dieses zu einem Trockensubstanzgehalt von nicht weniger als 95 Gew.-% konzentriert wird. Derartige Hartkaramellen können satzweise, kontinuierlich oder durch Schmelzextrusion hergestellt werden. Die Hartkaramellen können in geprägter oder gegossener Form vorliegen und gegebenenfalls Füllungen, beispielsweise Maltitsirup enthalten. Die Erfindung betrifft daher die Verwendung in Hartkaramellen, die das vorgenannte Süßungsmittelgemisch in einer Menge von 90 bis 99 Gew.-%, einen Geschmackstoff in einer Menge von 0,01 bis 2,5 Gew.-%, einen Intensivsüßstoff in einer Menge von 0,05 bis 0,25 Gew.-%, eine organische Säure in einer Menge von 0,1 bis 5,0 Gew.-% (jeweils bezogen auf das Gesamtgewicht der Karamelle), Wasser und einen medizinischen Wirkstoff insbesondere in einer Menge von 1,0 bis 15 mg pro Einheit enthalten.

Die Erfindung betrifft die Verwendung von 1,1 GPS gemäß der Patentansprüche in einer Hartaramelle zur Verbesserung der Wirkstoff- und/oder Aromenfreigabe, zur Erhöhung der Süßkraft und Erzielung einer verbesserten Textur. Die durch die Anwesenheit von 1,1 GPS erhöhte Löslichkeit des Süßungsmittelgemisches und damit der Hartkaramelle führt unter anderem zu einer subjektiv höheren Süßkraft sowie zu einer,beschleunigten Wirkstoff- und Aromenfreigabe. 1,1 GPS reduziert zudem die Rekristallisationsneigung des im Süßungsmittelgemisch ebenfalls enthaltenden 1,1 GPM und verbessert somit die Lagerfähigkeit und Textur der erfindungsgemäßen Karamellen.

Die folgenden Beispiele erläutern die Erfindung.

Die Figur zeigt eine Auflösekinetik von Hartkaramellen, ein Süßungsmittelgemisch aus 1,6 GPS, 1,1 GPS und 1,1 GPM enthalten im Vergleich zu Hartkaramellen, die Isomalt (hydrierte Isomaltulose) oder Saccharose- und Glucosesirup enthalten.

### Beispiel 1:

Herstellung von medizinisch wirksamen Hartkaramellen (Menthol), enthaltend ein Süßungsmittelgemisch aus 1,6 GPS, 1,1 GPS und 1,1 GPM.

### Rezeptur

| | |
|---|---|
| Süßungsmittelgemisch aus 1,6 GPS, 1,1 GPS und 1,1 GPM (46,2 Gew.-% 1,6 GPS, 4,2 Gew.-% 1,1 GPS und 49,6 Gew.-% 1,1 GPM, bezogen auf die Trockensubstanz) | 25 kg |
| Wasser | 8 kg |
| Menthol | 0,1 kg |
| Zitronensäure | 0,3 kg |
| Acesulfam K | 25 g |

### Herstellung

Das Süßungsmittelgemisch wird mit Wasser im Bonbonkocher auf 155°C bis 160°C gekocht, 5 Min vollem Vakuum ausgesetzt und nach Abkühlen der Masse auf 110 bis 115°C werden Menthol, Säure und gegebenenfalls auch Süßstoffe zugegeben. Anschließend wird die Masse zu Bonbons geprägt und gekühlt.

Die vorgenannte Rezeptur kann auch auf einer kontinuierlichen Kochanlage (Bosch, Klöckner) verarbeitet werden oder ohne Wasserzusatz in einer Schmelzextrusion zu Bonbons verarbeitet werden. Erfindungsgemäß können sowohl geprägte als auch gegossene Hartkaramellen hergestellt werden.

Die hergestellten Karamellen setzen schnell, kontinuierlich und lang anhaltend Menthol frei.

### Beispiel 2 (Vergleichsbeispiel) :

Auflösekinetik von Hartkaramellen (Saccharidgläser) aus hydrierter Isomaltulose (Isomalt), Saccharose/Glucosesirup und einem Süßungsmittelgemisch aus 1,1 GPS, 1,6 GPS und 1,1 GPM.

Zum Vergleich des Löslichkeitsverhaltens von Karamellen, die Isomalt, Saccharose/Glucosesirup oder ein Süßungsmittelgemisch aus 1,1 GPS, 1,6 GPS und 1,1 GPM enthalten, wurden Auflösekinetiken der Karamellen aufgenommen.

Die Isomalt enthaltenden Hartkaramellen enthielten kein 1,1 GPS (46,3 Gew.-% 1,1 GPM, 48,5 Gew.-% 1,6 GPS, bezogen auf die Trockensubstanz des eingesetzten Rohstoffes). Die Saccharose/Glucosesirup enthaltenden Hartkaramellen enthielten einen Rohstoff aus 100 Teilen kristalliner Saccharose und 80 Teilen Glucosesirup mit einem Trockensubstanzgehalt von 80 Gew.-%. 1,1 GPS war in diesen Karamellen ebenfalls nicht enthalten. Die 1,1 GPS enthaltenden Hartkaramellen enthielten 53 Gew.-% 1,1 GPM, 2 Gew.-% 1,1 GPS und 37 Gew.-% 1,6 GPS (bezogen auf die Trockensubstanz des eingesetzten Rohstoffes).

Das Auflöseverhalten wurde in einer Lösung gemäß LMBG, § 35 (Lebensmittel- und Bedarfsmittelgesetz) bei 37°C bestimmt. Die Menge an eingesetzten Lösungsmittel und Hartkaramellen wurde so gewählt, daß bei vollständiger Auflösung der Karamellen eine 20%ige Lösung gebildet wird. In Abhängigkeit von der Zeit wurde die Dichtezunahme in der Lösung ermittelt und daraus die Konzentration in g Trockensubstanz pro 100 g Lösung bestimmt.

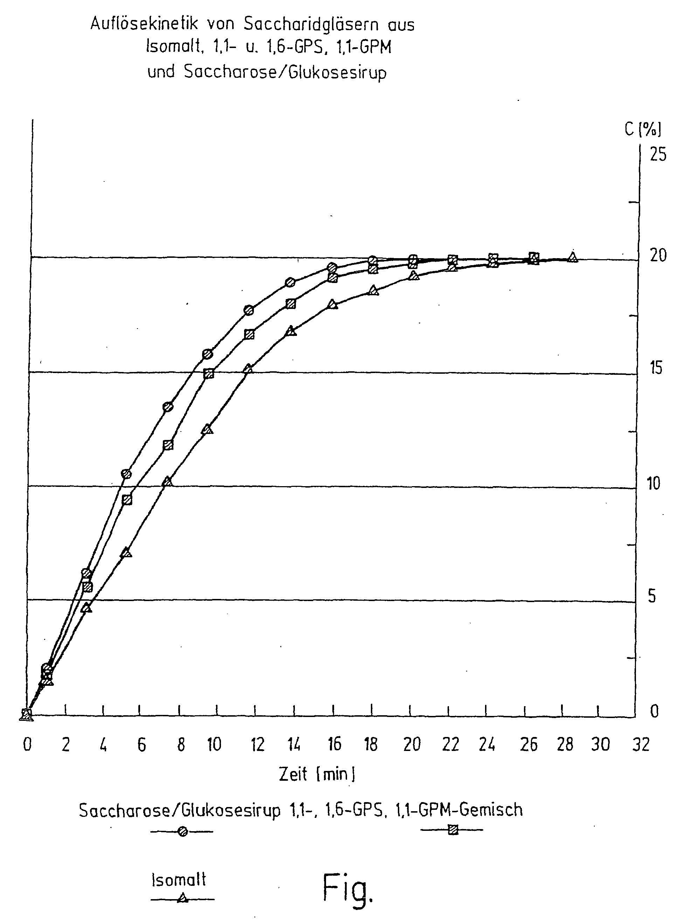

Die Figur 1 zeigt, daß die 1,1 GPS enthaltenden Hartkaramellen eine erhöhte Löslichkeit gegenüber Karamellen aufweisen, die Isomalt enthalten. Die Auflösezeit für Isomalt-enthaltende Karamellen lag bei 28,5 Min, während die Auflösezeit für 1,1 GPS enthaltende Karamellen bei 24 Min lag. Die 1,1 GPS enthaltenden Karamellen wieser gegenüber Saccharose/Glucosesirup enthaltenden Karamellen eine reduzierte Löslichkeit auf (Auflösezeit der Saccharose/Glucosesirup enthaltenden Karamellen: 22 Min). Die Karamellen erweitern daher in vorteilhafter Weise das Spektrum an zur Verfügung stehenden Trägern beispielsweise für die Arzneimittelapplikation. Die Karamellen sind ebenso wie Isomalt-enthaltende Karamellen akariogen und diabetikergeeignet, weisen jedoch eine verbesserte Löslichkeit auf.

### Beispiel 3 (Vergleichsbiespeil) :

### Schwellenprüfung

Zur Ermittlung der Intensität der Süßkraft der eingesetsten Karamellen wurde eine sensorische Analyse in Form einer Schwellenprüfung durchgeführt. Bei diesem Verfahren wurde eine Konzentrationsreihe in steigender Konzentration (0 bis 2,5%ige Lösung), ohne eine Rückverkostung vorzunehmen, sensorisch überprüft und anhand einer Zahlenskala bewertet. Der durch diesen Test ermittelte Schwellenwert gibt die Konzentration der jeweiligen Lösung an, bei der die Grundgeschmacksart "süß" von den Probanden eindeutig erkannt wurde. Dabei wurde eine wässrige Lösung aus einem Süßungsmittelgemisch aus 2 Gew.-% 1,1 GPS, 53 Gew.-% 1,1 GPM und 37 Gew.-% 1,6 GPS (bezogen auf die Trockensubstanz des eingesetzten Gemisches) verwendet.

**Tabelle 1**

| **Proben-Kennzeichnung** | **Konzentration [g/100g]** | **Erkennung des Schwellenwertes [%]** |
|---|---|---|
| 230196/1 | 0 | 0 |
| 230196/2 | 0,5 | 15 |
| 230196/3 | 1,0 | 50 |
| 230196/4 | 1,5 | 35 |
| 230196/5 | 2,0 | 0 |
| 230196/6 | 2,5 | 0 |

Ein analoger Versuch wurde mit Hartkaramellen durchgeführt, die ein Süßungsmittelgemisch der vorstehend genannten Zusammensetzung in steigender Konzentration enthielten. Die Ergebnisse entsprechen exakt denen der vorstehenden Tabelle 1.

Vergleichsweise wurde eine Konzentrationsreihe von Lösungen beziehungsweise Hartkaramellen verkostet, die hydrierte Isomaltulose (Isomalt) (46.3 Gew.-% 1,1 GPM, 48,5 Gew.-% 1,6 GPS, bezogen auf die Trokkensubstanz des eingesetzten Gemisches) enthielten:

**Tabelle 2**

| **Proben-Kennzeichnung** | **Konzentration [g/100g]** | **Erkennung des Schwellenwertes [%]** |
|---|---|---|
| 230196/7 | 0 | 0 |
| 230196/8 | 0,5 | 10 |
| 230196/9 | 1,0 | 20 |
| 230196/10 | 1,5 | 45 |
| 230196/11 | 2,0 | 25 |
| 230196/12 | 2,5 | 0 |

Die Auswertung der Schwellenprüfung zeigt, daß der durchschnittliche Schwellenwert der Isomaltprobe bei einer 1,67%igen Konzentration liegt, während der durchschnittliche Schwellenwert bei den 1,1-GPS-haltigen Karamellen bei einer 1,11%igen Konzentration liegt. Daraus läßt sich entnehmen, daß die Grundgeschmacksart "süß" innerhalb der 1,1-GPS-haltigen Süßungsmittelgemisch-Konzentrationsreihe von den Probanden um ca. 33% früher erkannt wurde, als in der Vergleichsreihe. Die Süßkraft der 1,1-GPS-haltigen Karamellen ist daher stärker als die der Vergleichskaramellen.

### Beispiel 4 (Vergleichsbeispiel):

### Paarweise Unterschiedsprüfung

Um die Intensität der Süßkraft der erfindungsgemäßen Karamellen und des darin verwendeten Süßungsmittelgemisches zu bestimmen, wurde eine sensorische Analyse in Form einer paarweisen Unterschiedsprüfung (Duo-Test) durchgeführt. Bei diesem Verfahren wurden die 1,1-GPS-haltigen Produkte (Herstellung aus einem Rohstoff der Zusammensetzung wie in Beispiel 3) im Vergleich zu Isomalt (hydrierte Isomaltulose) (Zusammensetzung wie in Beispiel 3) enthaltenen Produkten im unmittelbaren Vergleich als 10%ige Lösungen sowie als Hartkaramellen verkostet. Mit diesem Test war von den Probanden die Probe mit der höheren Süßintensität zu bestimmen. Um signifikante Ergebnisse zu erhalten, wurde der Duo-Test zweimal mit den gleichen Konzentrationen durchgeführt. Demgemäß erhielt jeder Proband zwei Probenpaare bei denen er zu bestimmen hatte, welche der Proben eine stärkere Süßkraft im Geschmack aufweist. Das Rückkosten war dabei erlaubt.

Bei der paarweisen Unterschiedsprüfung hat sich herausgestellt, daß bei einem erstem Probenpaar 80% (8 von 10 Probanden) der beteiligten Probanden die Lösung mit dem 1,1 GPS enthaltenden Süßungsmittelgemisch beziehungsweise die dieses Süßungsmittelgemisch enthaltenden Hartkaramellen als süßer gegenüber Isomalt-Produkten bewertet haben. Bei einem zweiten Probenpaar zeigte sich, daß 90% (9 von 10 Probanden) die 1,1 GPS enthaltende Lösung beziehungsweise die 1,1 GPS enthaltenden Hartkaramellen als süßer empfanden, als die hydrierte Isomaltulose (Isomalt) als Vergleichssubstanz enthaltenden Lösungen beziehungsweise Hartkaramellen.

Aufgrund der Verkostungsergebnisse kann davon ausgegangen werden, daß die Proben (Lösungen, Hartkaramellen), die das 1,1-GPS-haltigen Süßungsmittelgemisch enthalten, eine höhere Intensität der Süßkraft aufweisen, als die Proben, die die Vergleichssubstanz Isomalt (hydrierte Isomaltulose) enthalten.

## Patentansprüche

1. Verwendung von 1-O-α-D-Glucopyranosyl-D-sorbit (1,1-GPS) in einer zuckerfreien Hartkaramelle, die ein Süßungsmittelgemisch aus 2 bis 20 Gew.-% 1,1-GPS, 10 bis 50 Gew.-% 6-O-α-D-Glucopyranosyl-D-sorbit (1,6-GPS) und 30 bis 70 Gew.-% 1-O-α-D-Glucopyranosyl-D-mannit (1,1-GPM) in einer Menge von 90 bis 99 Gew.-%, einen Geschmacksstoff in einer Menge von 0,01 bis 2,5 Gew.-%, einen künstlichen Süßstoff in einer Menge von 0,05 bis 0,25 Gew.-%, eine organische Säure in einer Menge von 0,1 bis 5 Gew.-% und einen medizinischen Wirkstoff enthält, zur Verbesserung der Freigabe des Wirkstoffs, nämlich zur im Vergleich zu zuckerhaltigen Karamellen kontinuierlich und lang anhaltenden Freigabe, die im Unterschied zu hydrierte Isomaltulose enthaltenden Karamellen sehr schnell einsetzt, zur Erhöhung der Süßkraft und zur Erzielung einer verbesserten Textur.

2. Verwendung nach Anspruch 1, wobei die Hartkaramelle zusätzlich Sorbit und/oder Mannit enthält.

3. Verwendung nach einem der vorhergehenden Ansprüche, wobei die Hartkaramelle zusätzlich Farbstoffe enthält.

4. Verwendung nach einem der vorhergehenden Ansprüche, wobei der medizinische Wirkstoff Hexylresorcin/Menthol oder Menthol/Eukalyptus ist.

## Claims

1. Use of 1-O-α-D-glucopyranosyl-D-sorbitol (1,1-GPS) in a sugar-free hard caramel containing a sweetening-agent mixture of 2 to 20% by weight 1,1-GPS, 10 to 50% by weight 6-O-α-D-glucopyranosyl-D-sorbitol (1,6-GPS) and 30 to 70% by weight 1-O-α-D-glucopyranosyl-D-mannitol (1,1-GPM) in a proportion of 90 to 99% by weight, a flavoring in a proportion of 0,01 to 2,5% by weight, an artificial sweetener in a proportion of 0,05 to 0,25% by weight, an organic acid in a proportion of 0,1 to 5% by weight and a medicinally active substance, to improve the release of the active substance, i. e. for a continuous and long-lasting release, in comparison to sugar-containing caramels, which commences rapidly compared to hydrated isomaltulose-containing caramels, to increase the sweetening strength and to achieve an improved texture.

2. Use according to claim 1, wherein the hard caramel additionally contains sorbitol and/or mannitol.

3. Use according to one of the preceding claims, wherein the hard caramel additionally contains colorants.

4. Use according to one of the preceding claims, wherein the medicinally active substance is hexylresorcinol/menthol or menthol/eucalyptus.

## Revendications

1. Utilisation de 1-O-α-D-glucopyranosyl-D-sorbitol (1,1-GPS) dans un caramel dur sans sucre, renfermant un mélange d'édulcorants composé de 2 à 20 % en masse de 1,1-GPS, 10 à 50 % en masse de 6-O-α-D-glucopyranosyl-D-sorbitol (1,6-GPS) et 30 à 70 % en masse de 1-O-α-D-glucopyranosyl-D-mannitol (1,1-GPM) dans une quantité comprise entre 90 et 99 % en masse, un agent de sapidité dans une quantité comprise entre 0,01 et 2,5 % en masse, un édulcorant artificiel dans une quantité comprise entre 0,05 et 0,25 % en masse, un acide organique dans une quantité comprise entre 0,1 et 5 % en masse et une substance médicinale active pour améliorer la libération de la substance active, à savoir pour obtenir une libération qui, par rapport aux caramels contenant du sucre, soit continue et dure longtemps, et qui, à la différence des caramels renfermant de l'isomaltulose hydrogéné, s'amorce très rapidement, afin d'augmenter le pouvoir sucrant et obtenir une texture améliorée.

2. Utilisation selon la revendication 1, dans laquelle le caramel dur renferme en outre du sorbitol et/ou du mannitol.

3. Utilisation selon l'une des revendications précédentes, dans laquelle le caramel dur renferme en outre des colorants.

4. Utilisation selon l'une des revendications précédentes, dans laquelle la substance médicinale active est hexylrésorcine/menthol ou menthol/eucalyptus.
